# FASCICULE DE BREVET EUROPEEN

(11) **EP 2 758 472 B1**
(45) Date de publication et mention de la délivrance du brevet: **21.10.2015**
(21) Numéro de dépôt: 12759747.4
(22) Date de dépôt: 20.09.2012
(51) Int. Cl.: C08L 77/06

(54) **COMPOSITION COMPRENANT DU POLYAMIDE 66 ET UN POLYAMIDE CHOISI DANS LE GROUPE CONSTITUÉ PAR : LE POLYAMIDE 610, LE POLYAMIDE 1010 ET LE POLYAMIDE 1012**
ZUSAMMENSETZUNG MIT POLYAMID 66 UND EINEM AUS EINER AUS POLYAMID 610, POLYAMID 1010 UND POLYAMID 1012 BESTEHENDEN GRUPPE AUSGEWÄHLTEN POLYAMID
COMPOSITION COMPRISING POLYAMIDE 66 AND A POLYAMIDE CHOSEN FROM THE GROUP CONSISTING OF: POLYAMIDE 610, POLYAMIDE 1010 AND POLYAMIDE 1012

(30) Priorité: 21.09.2011 FR 1158396
(43) Date de publication de la demande: 30.07.2014
(73) Titulaire: Rhodia Operations, 93306 Aubervilliers (FR)
(72) Inventeur: YU, Yeong-Chool, Seoul 157-836 (KR); JUNG, Jin-Kyung, Seoul 135-838 (KR)
(74) Mandataire: Valentino, Cédric
(86) Numéro de dépôt international: PCT/EP2012/068476
(87) Numéro de publication internationale: WO 2013/041594

(56) Documents cités:
- US-A- 5 859 176
- US-B1- 6 759 474

## Description

La présente invention concerne une composition comprenant au moins du polyamide 66 et un polyamide choisi dans le groupe constitué par : le polyamide 610, le polyamide 1010 et le polyamide 1012; et éventuellement des charges et/ou additifs. Une telle composition présente une bonne résistance chimique, notamment aux chlorures et aux liquides de refroidissement.

Parmi les propriétés que l'on cherche souvent à contrôler pour un matériau polyamide destiné à être mis en forme par des techniques telles que l'injection, l'injection-gaz, l'extrusion, l'extrusion-soufflage, on cite la rigidité, la résistance aux chocs, la stabilité dimensionnelle, en particulier à température relativement élevée, le faible retrait après mise en forme, l'aptitude à la mise en peinture par différents procédés, l'aspect de surface, la densité. Ces propriétés peuvent être contrôlées, dans certaines limites, par le choix d'un polyamide ou par l'adjonction au polyamide de composés de différentes natures, comme des charges et/ou des additifs. Dans ce dernier cas, on parle de compositions polymères. Le choix d'un matériau pour une application donnée est généralement guidé par le niveau de performance exigé vis à vis de certaines propriétés et par son coût. On cherche toujours de nouveau matériaux susceptibles de répondre à un cahier des charges en terme de performance et/ou de coût. Le polyamide est par exemple un matériau largement utilisé, notamment dans le domaine de l'industrie automobile. Le polyamide est un polymère qui est résistant chimiquement, qui est stable à des températures élevées et qui peut être mélangé à d'autres types de polymères afin d'en modifier les propriétés. Toutefois certains polyamides comme le polyamide 66 ne présentent pas une bonne résistance aux agressions chimiques des conditions extérieures, comme par exemple une résistance élevée au stress-cracking dans les solutions d'halogénures, ou encore les liquides de refroidissement qui sont mis en contact avec les articles polyamides.

Le document US5859176 A divulgue une composition de polyamide contenant des charges de renfort pouvant être des fibres de verre. L'une des compositions préférées est constituée de PA 66 et PA 610.

On recherche un matériau à base de polyamide 66 présentant une meilleure résistance aux produits chimiques tout en ayant un bon compromis de propriétés mécaniques modifié, notamment avec une résistance aux chocs suffisante.

La demande vient de mettre en évidence que le mélange d'un polyamide 66 déséquilibré en groupements terminaux amines avec un polyamide 610 permettait de remédier aux inconvénients mentionnés précédemment. Une telle formulation permet notamment de présenter une résistance chimique aux solutions d'halogénures métalliques tel que le ZnCl₂ et aux solutions d'halogénure de métal alcalino-terreux tel que le CaCl₂, ou encore les liquides de refroidissement qui sont mis en contact avec les articles polyamides.

La CaCl₂ est notamment utilisé dans des unités de réfrigération, pour le salage des routes par grands froids, ou dans les ciments. Les liquides de refroidissement sont souvent composé d'eau avec un additif comme l'éthylène glycol ou le propylène glycol permettant d'augmenter la température d'ébullition et/ou d'augmenter sa résistance au gel.

La présente invention a ainsi pour principal objet une composition susceptible d'être obtenue par mélange d'au moins :
(a) un polyamide 66, la quantité de groupements terminaux amines étant supérieure à la quantité de groupements terminaux acides ;
(b) un polyamide choisi dans le groupe constitué par: le polyamide 610, le polyamide 1010 et le polyamide 1012; et
(c) des charges de renfort ou de remplissage.

L'invention concerne aussi un procédé de fabrication d'une composition dans lequel on mélange au moins :
(a) un polyamide 66, la quantité de groupements terminaux amines étant supérieure à la quantité de groupements terminaux acides ;
(b) polyamide choisi dans le groupe constitué par: le polyamide 610, le polyamide 1010 et le polyamide 1012; et
(c) des charges de renfort ou de remplissage.

L'invention concerne également l'utilisation d'une composition susceptible d'être obtenue par mélange d'au moins :
(a) un polyamide 66, la quantité de groupements terminaux amines étant supérieure à la quantité de groupements terminaux acides ;
(b) polyamide choisi dans le groupe constitué par: le polyamide 610, le polyamide 1010 et le polyamide 1012; et
(c) des charges de renfort ou de remplissage,
pour la fabrication d'articles présentant une résistance chimique améliorée.

L'invention concerne également l'utilisation d'une composition susceptible d'être obtenue par mélange d'au moins :
(a) un polyamide 66, la quantité de groupements terminaux amines étant supérieure à la quantité de groupements terminaux acides ;
(b) polyamide choisi dans le groupe constitué par: le polyamide 610, le polyamide 1010 et le polyamide 1012; et
(c) des charges de renfort ou de remplissage,
pour accroitre la résistance chimique d'un article obtenu à partir de ladite composition.

Les polyamides 66, 610, 1010 et 1012 sont bien décrits dans la littérature, notamment dans le Nylon Plastics Handbook de M.I. Kohan ; Hanser, 1995. On entend notamment par polyamide 66 un polyamide comprenant au moins 80 % en masse de motifs hexaméthylène adipamide. On entend notamment par polyamide 610 un polyamide comprenant au moins 80 % en masse de motifs hexaméthylène sebacamide. On entend notamment par polyamide 1010 un polyamide comprenant au moins 80 % en masse de motifs decamethylene sebacamide. On entend notamment par polyamide 1012 un polyamide comprenant au moins 80 % en masse de motifs decamethylene dodecamide. Ces polyamides peuvent donc parfaitement être des (co)polyamides. Les polyamides 66 et 610 sont généralement mélangés à chaud, notamment par extrusion.

Concernant le polyamide 66, la quantité de groupements terminaux amines est de préférence supérieure ou égale à 50 meq/kg, plus préférentiellement supérieur ou égale à 70 meq/kg. La différence entre les quantités de groupements terminaux amines et de groupements terminaux acides est de préférence supérieure ou égale à 5 meq/kg, encore plus préférablement supérieure à 10 meq/kg, particulièrement supérieure ou égale à 40 meq/kg.

Les quantités de groupements terminaux amines et/ou acides sont déterminées par dosages potentiométriques après dissolution du polyamide. Une méthode est par exemple décrite dans "Encyclopedia of Industrial Chemical Analysis", volume 17, page 293, 1973. Les quantités de groupements terminaux aminé (GTA) et/ou acide (GTC) peuvent être déterminées par dosage potentiométrique après complète dissolution du polyamide, par exemple dans le trifluoroéthanol, et ajout d'une base forte en excès. Les espèces basiques sont alors titrées par une solution aqueuse d'acide fort. La quantité de limiteur de chaîne est calculée par le rapport entre la quantité molaire de limiteur de chaîne ajoutée et la masse de polymère produit. La quantité de limiteur de chaîne peut également être déterminée par hydrolyse du polyamide suivie d'une analyse par chromatographie liquide.

L'obtention d'un polyamide 66 déséquilibré aminé peut être réalisé de diverses manières connues de l'homme du métier, telles que par exemple lors de la polymérisation en fonction du déséquilibre stoechiométrique des composés diamines et diacides, ou encore lors de l'extrusion par ajout de composés permettant d'obtenir un polyamide 66 final déséquilibré amine.

La composition comprend préférentiellement de 20 à 70 % en poids de polyamide choisi dans le groupe constitué par : le polyamide 610, le polyamide 1010 et le polyamide 1012, par rapport au poids total de la composition. La composition comprend préférentiellement de 40 à 80 % en poids de polyamide choisi dans le groupe constitué par : le polyamide 610, le polyamide 1010 et le polyamide 1012, par rapport au poids total de polyamide 66 et de polyamide choisi dans le groupe constitué par : le polyamide 610, le polyamide 1010 et le polyamide 1012.

La composition comprend préférentiellement de 15 à 60 % en poids de polyamide 66, par rapport au poids total de la composition.

La composition selon l'invention peut en outre comprendre des charges de renfort ou de remplissages. Celles-ci peuvent être par exemple des charges fibreuses et/ou des charges non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

La composition peut également comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les ethylène-propylène-diène momonère (EPDM) avec éventuellement un anhydride maléïque greffé.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %, préférentiellement être 5 et 20 %.

Ces charges et additifs peuvent être ajoutés à la composition polyamide par des moyens usuels adaptés à chaque charge ou additif, tel que par exemple lors de la polymérisation ou en mélange en fondu.

Les compositions thermoplastiques sont généralement obtenues par mélange des différents composés entrant dans la composition, les composés thermoplastiques étant sous forme fondue. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, soumise à une force de cisaillement, et véhiculée. De tels dispositifs sont parfaitement connus de l'homme du métier. Selon un premier mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important. On peut, selon des modes de réalisations particuliers, effectuer des pré-mélanges de certains des composés avant préparation de la composition finale.

Les compositions de l'invention sont généralement obtenus par mélange des différents constituants à chaud, par exemple dans une extrudeuse mono ou bivis, à une température suffisante pour maintenir la résine polyamide en milieu fondu ; ou a froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs peut être réalisée par ajout de ces composés dans la matrice plastique fondue sous forme pure ou sous forme de mélange concentré dans une matrice telle que par exemple une matrice plastique.

La composition est préférentiellement une composition à mouler, par exemple sous forme de granulés ou de poudre, servant notamment à la fabrication d'articles par un procédé de moulage ou de moulage par injection notamment. L'invention concerne ainsi également un procédé de fabrication d'articles plastiques mettant en oeuvre la composition telle que décrite précédemment. La composition selon l'invention peut être utilisée pour tout procédé de mise en forme des matières plastiques, tels que par exemple les procédés de moulage, notamment le moulage par injection, le rotomoulage, le frittage, la coulée, ou d'extrusion comme l'extrusion soufflage et le filmage, ou encore les procédés de filage. L'invention concerne ainsi aussi des procédés de fabrication d'articles moulés ou extrudés par mise en forme d'une composition de l'invention.

Le formulation peut notamment servir à la réalisation d'articles destinés à recueillir ou véhiculer des fluides, tels que des gaz ou des liquides, comme par exemple des tubes, conduits, ou réservoirs. Ces articles peuvent être monocouche ou multicouches. La formulation de l'invention peut notamment servir à former une de ces couches des articles multicouches, par exemple en association avec d'autres couches fait de divers polymères possibles.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales. Le terme et/ou inclut les significations et, ou, ainsi que toutes les autres combinaisons possibles des éléments connectés à ce terme. D'autres détails ou avantages de l'invention apparaîtront plus clairement au vu des exemples donnés ci-dessous uniquement à titre indicatif.

### PARTIE EXPERIMENTALE

Les composés utilisés sont les suivants :
- A-1 : polyamide 66 Technyl 26A, fabriqué par Rhodia, ayant un IV de 128 mL/g, (ISO 307 / acide formique) et une concentration en groupements terminaux acides de 81,7 meq/kg et une concentration en groupements terminaux amines de 48,2 meq/kg.
- A-2 : polyamide 66 Technyl fabriqué par Rhodia et ayant un IV de 150 mL/g, (ISO 307 / acide formique) et une concentration en groupements terminaux acides de 32,4 meq/kg et une concentration en groupements terminaux amines de 74,8 meq/kg.
- B : polyamide 610 ayant une viscosité relative de 2,8 (mesuré avec 1 % en poids dans l'acide sulfurique à 23°C) et un point de fusion de 218°C
- B2 : polyamide 1010 ayant une viscosité relative de 2.5 (mesuré avec 1 % en poids dans l'acide sulfurique à 23°C) et un point de fusion de 199,6°C
- C : fibres de verre E de 4,5 mm de longueur
- Additifs comprenant des antioxidants et des agents de lubrification

Les compositions sont fabriqués par mélange des composés dans une extrudeuse bi-vis (diamètre intérieur 30 mm ; L/D=30). Le profil de température de l'extrudeuse est compris entre 260 et 280°C. La vitesse d'extrusion est compris entre 250 et 300 rpm sous un vide de 50-70 cm Hg.

Les granulés obtenus et après séchage sont mis en forme dans une presse à injecter ENGEL avec une force de compression de 80 tonnes et un volume d'injection de 189,44 cc. La température du cylindre est de 280°C et la température du moule est de 80°C. Le cycle d'injection est de refroidissement est de 15 secondes environ. Différents spécimens selon les tests a effectuer ont été réalisés.

Les formulations sont testées et les résultats sont mentionnés ci-après :

### Exemple 1 : Résistance au CaCl₂

Les échantillons ont été placés dans une solution aqueuse comprenant 30 % en poids de CaCl₂ à 130°C pendant 960 heures et les résultats sont mentionnés dans le Tableau 1 suivant :

**Tableau 1**

| | Unité | **C1** | **C2** | **1** | **2** |
|---|---|---|---|---|---|
| A-1 | % | 64,0 | 33,0 | - | - |
| A-2 | % | - | - | 33,0 | 33,0 |
| B | % | - | 31,0 | 31,0 | - |
| B2 | % | - | - | - | 31,0 |
| C | % | 35,0 | 35,0 | 35,0 | 35,0 |
| Additifs | % | 1,0 | 1,0 | 1,0 | 1,0 |
| Résistance à la rupture Initiale | (ASTM D-638) MPa | 206,0 | 201,0 | 199,0 | 173,7 |
| Résistance à la rupture Après 960 heures | (ASTM D-638) MPa | 87,6 | 120 | 131 | 116,1 |
| Rétention | % | 42,5 | 59,7 | 65,8 | 66,8 |

On soumet par ailleurs les échantillons sous forme d'haltères à des cycles de 4 heures dans une chambre à une pression de 19 MPa et 100°C. Les échantillons sont aspergés 3 fois par jour avec une solution aqueuse comprenant 50 % en poids de CaCl₂ (5 ml/jour). Une des extrémités des échantillons est soumis a une contrainte par un poids de 660 g. On observe à la surface des échantillons des craquelures au bout de 3 cycles pour la composition C1, au bout de 24 cycles pour la composition C2 et au bout de 96 cycles seulement pour la composition 1.

### Exemple 2 : Résistance au LLC

Les échantillons ont été placés dans un liquide de refroidissement de type LLC contenant 50% en poids d'eau et 50 % en poids d'éthylène glycol pendant 960 heures et les résultats sont mentionnés dans le Tableau 2 suivant :

**Tableau 2**

| | Unité | **C1** | **1** |
|---|---|---|---|
| A-1 | % | 20,0 | - |
| A-2 | % | - | 20,0 |
| B | % | 46,3 | 46,3 |
| C | % | 33,0 | 33,0 |
| Additifs | % | 0,7 | 0,7 |
| Résistance à la rupture initial | (ASTM D-638) MPa | 187,3 | 181,0 |
| Résistance à la rupture Après 504 heures | (ASTM D-638) MPa | 84,5 | 91,7 |
| Rétention | % | 45,1 | 50,7 |
| Résistance à la rupture Après 700 heures | (ASTM D-638) MPa | 74,6 | 80,7 |
| Rétention | % | 39,8 | 44,6 |

Il est a noter qu'une formulation similaire à la formulation 1 mais comprenant 46,3 de polyamide B2 à la place de B permet d'obtenir une rétention de la résistance à la rupture de 59,7 % après 900 heures.

### Exemple 3 : Propriétés mécaniques

La résistance au chocs Izod a été mesurée selon la norme ASTM D-256 avec les formulations C1, C2 et C1 de l'exemple 1. On obtient 10,3 KJ/m² pour la formulation C1, 16,8 KJ/m² pour la formulation C2 et 18,6 KJ/m² pour la formulation 1 ; les autres propriétés d'élongation à la rupture, d'HDT et de résistance à la flexion étant par ailleurs équivalentes entre les différentes formulations.

## Revendications

1. Composition susceptible d'être obtenue par mélange d'au moins :
(a) un polyamide 66, la quantité de groupements terminaux amines étant supérieure à la quantité de groupements terminaux acides ;
(b) un polyamide choisi dans le groupe constitué par: le polyamide 610, le polyamide 1010 et le polyamide 1012 ; et
(c) des charges de renfort ou de remplissage.

2. Composition selon la revendication 1, **caractérisée en ce que** le polyamide 66 présente une quantité de groupements terminaux amines supérieure ou égale à 50 meq/kg.

3. Composition selon la revendication 1 ou 2, **caractérisée en ce que** la différence entre les quantités de groupements terminaux amines et de groupements terminaux acides du polyamide 66 est supérieure ou égale à 5 meq/kg.

4. Composition selon l'une quelconque des revendications précédentes, **caractérisée en ce que** la composition comprend de 20 à 70 % en poids de polyamide choisi dans le groupe constitué par : le polyamide 610, le polyamide 1010 et le polyamide 1012, par rapport au poids total de la composition.

5. Composition selon l'une quelconque des revendications précédentes, **caractérisée en ce que** la composition comprend de 15 à 60 % en poids de polyamide 66, par rapport au poids total de la composition.

6. Composition selon l'une quelconque des revendications précédentes, **caractérisée en ce que** la composition comprend des charges fibreuses et/ou des charges non fibreuses.

7. Composition selon l'une quelconque des revendications précédentes, **caractérisée en ce que** la composition comprend entre 1 % et 60 % en poids de charges de renfort ou de remplissage, par rapport au poids total de la composition.

8. Procédé de fabrication d'une composition dans lequel on mélange au moins :
(a) un polyamide 66, la quantité de groupements terminaux amines étant supérieure à la quantité de groupements terminaux acides ;
(b) polyamide choisi dans le groupe constitué par: le polyamide 610, le polyamide 1010 et le polyamide 1012; et
(c) des charges de renfort ou de remplissage.

9. Procédé de fabrication d'article plastique mettant en oeuvre au moins un composition selon l'une quelconque des revendications 1 à 7.

10. Utilisation d'une composition susceptible d'être obtenue par mélange d'au moins :
(a) un polyamide 66, la quantité de groupements terminaux amines étant supérieure à la quantité de groupements terminaux acides ;
(b) polyamide choisi dans le groupe constitué par: le polyamide 610, le polyamide 1010 et le polyamide 1012; et
(c) des charges de renfort ou de remplissage,
pour la fabrication d'articles présentant une résistance chimique améliorée.

11. Utilisation d'une composition susceptible d'être obtenue par mélange d'au moins :
(a) un polyamide 66, la quantité de groupements terminaux amines étant supérieure à la quantité de groupements terminaux acides ;
(b) polyamide choisi dans le groupe constitué par: le polyamide 610, le polyamide 1010 et le polyamide 1012; et
(c) des charges de renfort ou de remplissage,
pour accroitre la résistance chimique d'un article obtenu à partir de ladite composition.

## Patentansprüche

1. Zusammensetzung, die erhalten werden kann, indem mindestens Folgendes vermischt wird:
(a) ein Polyamid 66, wobei die Menge an endständigen Amingruppen größer als die Menge an endständigen Säuregruppen ist;
(b) ein Polyamid, das aus der Gruppe ausgewählt ist, welche aus den folgenden besteht: Polyamid 610, Polyamid 1010 und Polyamid 1012; und
(c) verstärkende oder streckende Füllstoffe.

2. Zusammensetzung nach Anspruch 1, **dadurch gekennzeichnet, dass** das Polyamid 66 eine Menge an endständigen Amingruppen aufweist, die mindestens 50 mÄq/kg beträgt.

3. Zusammensetzung nach Anspruch 1 oder 2, **dadurch gekennzeichnet, dass** der Unterschied zwischen den Mengen an endständigen Amingruppen und an endständigen Säuregruppen des Polyamids 66 mindestens 5 mÄq/kg beträgt.

4. Zusammensetzung nach einem der vorhergehenden Ansprüche, **dadurch gekennzeichnet, dass** die Zusammensetzung 20 bis 70 Gewichts-% Polyamid umfasst, das aus der Gruppe ausgewählt ist, welche aus den folgenden besteht: Polyamid 610, Polyamid 1010 und Polyamid 1012, bezogen auf das Gesamtgewicht der Zusammensetzung.

5. Zusammensetzung nach einem der vorhergehenden Ansprüche, **dadurch gekennzeichnet, dass** die Zusammensetzung 15 bis 60 Gewichts-% Polyamid 66 umfasst, bezogen auf das Gesamtgewicht der Zusammensetzung.

6. Zusammensetzung nach einem der vorhergehenden Ansprüche, **dadurch gekennzeichnet, dass** die Zusammensetzung faserartige Füllstoffe und/oder nicht-faserartige Füllstoffe umfasst.

7. Zusammensetzung nach einem der vorhergehenden Ansprüche, **dadurch gekennzeichnet, dass** die Zusammensetzung 1 bis 60 Gewichts-% verstärkende oder streckende Füllstoffen umfasst, bezogen auf das Gesamtgewicht der Zusammensetzung.

8. Verfahren zur Herstellung einer Zusammensetzung, wobei mindestens Folgendes vermischt wird:
(a) ein Polyamid 66, wobei die Menge an endständigen Amingruppen größer als die Menge an endständigen Säuregruppen ist;
(b) Polyamid, das aus der Gruppe ausgewählt ist, welche aus den folgenden besteht: Polyamid 610, Polyamid 1010 und Polyamid 1012; und
(c) verstärkende oder streckende Füllstoffe.

9. Verfahren zur Herstellung eines Kunststoffgegenstandes, wobei mindestens eine Zusammensetzung nach einem der Ansprüche 1 bis 7 eingesetzt wird.

10. Verwendung einer Zusammensetzung, die erhalten werden kann, indem mindestens Folgendes vermischt wird:
(a) ein Polyamid 66, wobei die Menge an endständigen Amingruppen größer als die Menge an endständigen Säuregruppen ist;
(b) Polyamid, das aus der Gruppe ausgewählt ist, welche aus den folgenden besteht: Polyamid 610, Polyamid 1010 und Polyamid 1012; und
(c) verstärkende oder streckende Füllstoffe,
zur Herstellung von Gegenständen, die eine verbesserte chemische Beständigkeit aufweisen.

11. Verwendung einer Zusammensetzung, die erhalten werden kann, indem mindestens Folgendes vermischt wird:
(a) ein Polyamid 66, wobei die Menge an endständigen Amingruppen größer als die Menge an endständigen Säuregruppen ist;
(b) Polyamid, das aus der Gruppe ausgewählt ist, welche aus den folgenden besteht: Polyamid 610, Polyamid 1010 und Polyamid 1012; und
(c) verstärkende oder streckende Füllstoffe,
zur Erhöhung der chemischen Beständigkeit eines Gegenstands, der aus dieser Zusammensetzung hergestellt wurde.

## Claims

1. Composition obtainable by blending at least:
(a) a polyamide 66, the amount of terminal amine groups being greater than the amount of terminal acid groups;
(b) a polyamide selected from the group consisting of: polyamide 610, polyamide 1010 and polyamide 1012; and
(c) reinforcing or bulking fillers.

2. Composition according to Claim 1, **characterized in that** the polyamide 66 has an amount of terminal amine groups of greater than or equal to 50 meq/kg.

3. Composition according to Claim 1 or 2, **characterized in that** the difference between the amounts of terminal amine groups and terminal acid groups in the polyamide 66 is greater than or equal to 5 meq/kg.

4. Composition according to any one of the preceding claims, **characterized in that** the composition comprises from 20% to 70% by weight of polyamide selected from the group consisting of: polyamide 610, polyamide 1010 and polyamide 1012, with respect to the total weight of the composition.

5. Composition according to any one of the preceding claims, **characterized in that** the composition comprises from 15% to 60% by weight of polyamide 66, with respect to the total weight of the composition.

6. Composition according to any one of the preceding claims, **characterized in that** the composition comprises fibrous fillers and/or nonfibrous fillers.

7. Composition according to any one of the preceding claims, **characterized in that** the composition comprises between 1% and 60% by weight of reinforcing or bulking fillers, with respect to the total weight of the composition.

8. Method for producing a composition, which comprises blending at least:
(a) a polyamide 66, the amount of terminal amine groups being greater than the amount of terminal acid groups;
(b) a polyamide selected from the group consisting of: polyamide 610, polyamide 1010 and polyamide 1012; and
(c) reinforcing or bulking fillers.

9. Method for producing a plastics article, employing at least one composition according to any one of Claims 1 to 7.

10. Use of a composition obtainable by blending at least:
(a) a polyamide 66, the amount of terminal amine groups being greater than the amount of terminal acid groups;
(b) a polyamide selected from the group consisting of: polyamide 610, polyamide 1010 and polyamide 1012; and
(c) reinforcing or bulking fillers,
for producing articles exhibiting enhanced chemical resistance.

11. Use of a composition obtainable by blending at least:
(a) a polyamide 66, the amount of terminal amine groups being greater than the amount of terminal acid groups;
(b) a polyamide selected from the group consisting of: polyamide 610, polyamide 1010 and polyamide 1012; and
(c) reinforcing or bulking fillers,
for increasing the chemical resistance of an article obtained from said composition.
